# EUROPÄISCHE PATENTSCHRIFT

(11) **EP 1 990 570 B1**
(45) Veröffentlichungstag und Bekanntmachung des Hinweises auf die Patenterteilung: **14.09.2011**
(21) Anmeldenummer: 07405134.3
(22) Anmeldetag: 08.05.2007
(51) Int. Cl.: F16K 31/60, F16K 37/00

(54) **Stelleneinrichtung für ein steigendes Spindelventil**
Position indicator for a rising spindle valve
Indicateur de position pour une soupape à tige déplaçable verticalement

(43) Veröffentlichungstag der Anmeldung: 12.11.2008
(73) Patentinhaber: R. Nussbaum AG, 4601 Olten (CH)
(72) Erfinder: Bobst, Urs, 4703 Kestenholz (CH); Näf, Andreas, 5000 Aarau (CH); Röthlisberger, Peter, 4538 Oberbipp (CH); Zeiter, Patrik, 4853 Riken (CH); Krohn, Michael, 8049 Zürich (CH); Käppeli, Serge, 8003 Zürich (CH)
(74) Vertreter: Rüfenacht, Philipp Michael

(56) Entgegenhaltungen:
- EP-A1- 1 548 340
- GB-A- 2 283 301
- US-A- 1 688 390
- US-A- 2 514 025
- US-A- 3 482 596

## Beschreibung

### Technisches Gebiet

Die Erfindung betrifft eine Stelleinrichtung für ein steigendes Spindelventil, welche einen Grundkörper, eine Spindel und ein Stellrad zur Betätigung der Spindel umfasst. Ferner bezieht sich die Erfindung auf einen Ventileinsatz und ein Spindelventil umfassend eine derartige Stelleinrichtung.

### Stand der Technik

Ventile zur Regelung eines Flusses durch ein Rohr können so ausgestaltet sein, dass der Durchfluss mittels einer drehbaren Antriebsspindel reguliert werden kann. Die Spindel ist üblicherweise in einem Grundkörper untergebracht, wobei zur Bedienung des Ventils aus diesem Grundkörper ein Teil der Spindel herausragt, an welchem z. B. ein Handrad angebracht ist. Bei einer steigenden Ausführung solcher Spindelventile bewegt sich der aus dem Grundkörper herausragende Teil der Spindel und damit die Betätigungsvorrichtung des Ventils in axialer Richtung, wenn die Ventilstellung verändert wird.

Solche steigenden Spindelventile werden u. a. für Absperrventile eingesetzt, also für Ventile, welche dazu dienen einen bestimmten Teil eines Leitungssystems zeitweise abzutrennen, indem das Ventil den Durchfluss sperrt.

Die US 2,514,025 (Bush John C) beschreibt eine Verbesserung eines Stellaparates zur Regulierung des Flusses von Öl, Gas oder ähnlichem, wobei die Durchflussmenge einfach und präzise mit einem Hebel eingestellt werden kann. Das eigentliche Betätigen der Spindel wird dann mit einem weiteren Hebel (Stellrad) vollzogen. Neben diesen beiden Hebeln umfasst die Vorrichtung einen Grundkörper, eine Spindel und ein steigendes Spindelventil. Mittels eines Rings mit einer Skala ist ersichtlich, wann das Ventil ganz geschlossen ist. Des Weiteren wird das Problem angesprochen, dass sich durch den Gebrauch der Nullpunkt, bei dem das Ventil ganz geschlossen ist, verschiebt. Somit könne es sein, dass mit der Zeit die Anzeige für den Hebel unter die Nullmarke falle. Dies könne aber korrigiert werden, indem das Ventil zuerst ganz geschlossen und danach die Schraube, die den Ring am Grundkörper sichert, gelöst werde. Nun wird der Ring verschoben, so dass die Skala wieder mit der Anzeige des Hebels übereinstimmt, und mit der Schraube wieder gesichert.

Ältere Spindelventile waren zumeist so ausgeführt, dass die Spindel selbst offen lag und von aussen sichtbar war. Die Spindel konnte somit als Stellungsanzeige dienen. Bei einem verkapselten steigenden Spindelventil ist die Ventilstellung - und damit, ob der entsprechende Teil des Leitungssystems abgetrennt ist oder nicht - jedoch von aussen nicht direkt sichtbar. Bei verkapselten Spindelventilen werden bislang häufig am Grundkörper fest angebrachte Aufkleber verwendet, welche die Funktion einer Stellungsanzeige erfüllen. Dies geschieht beispielsweise dadurch, dass ein Aufkleber auf einem Grundkörper des Ventils fest aufgeklebt wird, welcher in vollständig geschlossener Ventilstellung beispielsweise von einem Handrad des Ventils verdeckt wird. Befindet sich das Ventil in einer zumindest teilweise geöffneten Stellung, so ist zumindest ein Teil des Aufklebers sichtbar.

Wenn entsprechende Ventile zur Regelung der Ausflussmenge bei einem Hahn eingesetzt werden, ist es von Nachteil, wenn die aktuelle Stellung des Ventils nicht sichtbar ist, insbesondere wenn das ausfliessende Medium selbst optisch nicht wahrnehmbar ist (Gase) oder wenn sich das Ventil in einem zeitweise abgetrennten Leitungsteil befindet. Aber auch wenn ein entsprechendes Ventil eine Zuleitung absperrt oder freigibt, kann eine falsche Ventilstellung fatale Folgen haben, wie dies beispielsweise bei Feuerlöschleitungen, Sprinkleranlagen und dergleichen der Fall ist. Die Verwendung von Aufklebern als Stellungsanzeigen bei verkapselten steigenden Spindelventilen hat dabei den Nachteil, dass die Anzeige unpräzis ist und die Montage der Kleber zeit- und damit kostenintensiv ist, weil diese üblicherweise in Handarbeit ausgeführt wird. Für jede Ventilart wird ein spezieller Aufkleber benötigt, was dazu führt, dass eine Reihe unterschiedlicher Kleber bevorratet werden muss. Bei einer gewünschten Umrüstung beispielsweise in Form eines neuen Handrads oder anderer Komponenten des Oberteils des Ventils kann die vorhandene Stellungsanzeige nicht ohne Weiteres übernommen werden, weil sich die Länge des Einstellbereichs des Ventils verändern kann. In diesem Zusammenhang besteht zudem die Gefahr, dass die Aufkleber bei der Montage miteinander vertauscht werden und zu fehlerhaften Anzeigen führen. Die Veränderung der Länge des Einstellbereichs des Ventils liegt in der Dichtung des Ventiltellers begründet, welche aus elastischen Materialien gefertigt wird. Diese elastischen Materialien verändern unter dauerhafter Druckbelastung nachhaltig ihre Form und verbleiben zumindest zeitweise in einem zusammengedrückten Zustand. Um eine dichte Ventilstellung zu erreichen, muss daher ein Ventilteller mit einer bereits zusammengedrückten Dichtung weiter geschlossen werden als ein Ventilteller mit einer jungen Dichtung.

Ein weiterer Nachteil der bisher verwendeten Aufkleber liegt darin, dass sich die vollständig geschlossene Ventilstellung mit häufigen Öffnungs- und Verschlussvorgängen verschiebt. Die Dichtung gibt mit zunehmender Verwendung nach, was dazu führt, dass das Ventil weiter geschlossen werden muss, je länger es in Gebrauch ist, um eine Leitung tatsächlich vollständig zu verschliessen. Der Aufkleber ist jedoch fest auf dem Grundkörper angebracht, sodass die Anzeige mit zunehmender Lebensdauer immer ungenauer wird. Schliesslich besteht bei Aufklebern stets die Gefahr, diese vollständig oder teilweise abzureissen und die Stellungsanzeige damit zu zerstören. In jedem Fall kommt es dazu, dass die Aufkleber bei andauernder Verwendung des Ventils optisch stark in Mitleidenschaft gezogen werden.

### Darstellung der Erfindung

Aufgabe der Erfindung ist es, eine dem eingangs genannten technischen Gebiet zugehörige Stelleinrichtung zu schaffen, welche die Stellung eines Ventils mit einer steigenden Antriebsspindel in einem Grundkörper von aussen sichtbar präzise wiedergibt.

Die Aufgabe wird durch die Merkmale des Anspruchs 1 gelöst. Gemäss der Erfindung ist auf dem Grundkörper eine Hülse derart gelagert, dass bei einem Verschliessvorgang ein direkter oder indirekter Kontakt zwischen ihr und dem Stellrad hergestellt wird. Bevorzugt wird dabei zwischen der Hülse und dem Stellrad ein formschlüssiger Kontakt hergestellt. Der Kontakt kann dabei auch derart indirekt sein, dass zwischen dem Stellrad und der Hülse ein Zwischenstück eingefügt ist. Die Hülse folgt dem Stellrad bei jedem Verschliessvorgang bis zu dessen Extremalstellung und behält diese Position während eines anschliessenden Öffnungsvorgangs bei.

Durch den direkten oder indirekten, insbesondere formschlüssigen, Kontakt zwischen der Hülse und dem.Stellrad, der bei einem Verschliessvorgang entstehen kann, wird die Hülse durch das Stellrad bewegt, ohne fest mit ihm verbunden zu sein. Die Hülse kann also durch das Stellrad nur in Verschliessrichtung verschoben werden, sobald der, insbesondere formschlüssige, Kontakt hergestellt ist. Falls das Stellrad während des Verschliessvorgangs und vor der vollständig geschlossenen Ventilstellung die Hülse oder ein Zwischenstück zwischen der Hülse und dem Stellrad kontaktiert, wird die Hülse direkt oder indirekt durch das Stellrad bis zu der Position mitbewegt, die der vollständig geschlossenen Ventilstellung entspricht. Wenn das Stellrad wieder zurückgedreht wird, um eine geöffnete Ventilstellung einzunehmen, sich also gegen die Verschliessrichtung bewegt, verbleibt die Hülse in der zur vollständig geschlossenen Ventilstellung zugehörigen Position. Die Hülse wird erst dann wieder bewegt, wenn sie durch das Stellrad auf Grund einer Verlagerung der vollständig geschlossenen Position wieder in Verschliessrichtung verschoben werden kann.

Gemäss der Erfindung enthält ein Ventileinsatz eine Stelleinrichtung, wobei auf einem Grundkörper der Stelleinrichtung eine Hülse derart gelagert ist, dass bei einem Verschliessvorgang ein direkter oder indirekter, insbesondere formschlüssiger, Kontakt zwischen ihr und einem Stellrad hergestellt wird. Die Hülse folgt dem Stellrad bei jedem Verschliessvorgang bis zu dessen Extremalstellung und behält diese Position während eines anschliessenden Öffnungsvorgangs bei. Auf diese Weise kann eine selbstjustierende Stellungsanzeige für einen Ventileinsatz realisiert werden.

Gemäss der Erfindung enthält ein steigendes Spindelventil eine Stelleinrichtung, wobei auf einem Grundkörper der Stelleinrichtung eine Hülse derart gelagert ist, dass bei einem Verschliessvorgang ein direkter oder indirekter, insbesondere formschlüssiger, Kontakt zwischen ihr und einem Stellrad hergestellt wird. Die Hülse folgt dem Stellrad bei jedem Verschliessvorgang bis zu dessen Extremalstellung und behält diese Position während eines anschliessenden Öffnungsvorgangs bei. Auf diese Weise kann eine selbstjustierende Stellungsanzeige für ein steigendes Spindelventil realisiert werden. Die erfindungsgemässe Stelleinrichtung kann dabei sowohl in Geradsitzventilen, als auch in Schrägsitzventilen eingesetzt werden.

Die Anschlussmasse des erfindungsgemässen Ventileinsatzes oder Spindelventils liegen bevorzugt zwischen 0.5" und 4", was den Nennweiten DN 15 bis DN 100 gemäss DIN EN ISO 6708 entspricht. Die erfindungsgemässe Stelleinrichtung kann jedoch ebenfalls für Ventileinsätze oder Spindelventile davon abweichender Masse verwendet werden.

Der erfindungsgemässe Ventileinsatz, das Spindelventil und die Stelleinrichtung werden bevorzugt in Trinkwassersystemen eingesetzt. Die besonders hohe Hygieneanforderungen erfüllende Stelleinrichtung kann alternativ auch in anderen Bereichen eingesetzt werden.

Die Anforderungen an ein Gehäuse und einen Grundkörper für ein derartiges Spindelventil werden unter anderem durch Trinkwassertauglichkeit, Wärmebeständigkeit, Wasserbeständigkeit, insbesondere die Vermeidung von Hydrolysen, und eine hohe Festigkeit gebildet. Gehäuse der oben genannten Art müssen einem Innendruck von 16 bar sicher standhalten. Diese Anforderungen sollten dabei möglichst dauerhaft erfüllt werden.

Bevorzugt ist die Hülse dabei so auf den Grundkörper aufgesetzt, dass zwischen der Hülse und dem Grundkörper ein hoher Reibungswiderstand besteht. Der hohe Reibungswiderstand kann durch das Stellrad problemlos überwunden und die Hülse in Verschliessrichtung bewegt werden. Ohne Krafteinwirkung durch das Stellrad behält die Hülse ihre Position auf dem Grundkörper jedoch bei und läuft nicht Gefahr, durch versehentliche Einwirkung einer kleinen Kraft verschoben zu werden.

Bevorzugt ist die Hülse durch das Stellrad zumindest teilweise verdeckbar. Sie kann von dem Stellrad derart aufgenommen werden, dass sie in der zur vollständig geschlossenen Ventilstellung gehörigen Position des Stellrads von aussen nicht sichtbar ist. Sobald die Hülse oder Teile der Hülse dann von aussen sichtbar sind, zeigt dies an, dass die Stelleinrichtung nicht vollständig geschlossen ist. In dieser Ausführungsform befindet sich die insbesondere formschlüssige Kontaktfläche zwischen dem Stellrad und der Hülse bevorzugt im Innern des Stellrads.

Alternativ ist es auch möglich, dass die Hülse durch das Stellrad nicht vollständig verdeckbar ist, sondern stets von aussen teilweise sichtbar und teilweise durch das Stellrad verdeckt ist. Die Ventilstellung kann auf diese Weise durch die relative Position des Stellrads zur Hülse und/oder zum Grundkörper angezeigt werden. Vorzugsweise ist die Hülse mit einer Markierung versehen, die die vollständig geschlossene Ventilstellung anzeigt.

Alternativ ist es auch möglich, dass die Hülse stets sichtbar ist und zur Beurteilung der Verschlusssituation der Stelleinrichtung die relative Position des Stellrads zur Hülse verwendet wird. In diesem Fall könnte die Hülse derart auf dem Grundkörper gelagert sein, dass der Aussenrand des Stellrads einen insbesondere formschlüssigen Kontakt mit der Hülse herstellt und diese vor sich her schiebt. Hinsichtlich der Anzeigefunktion der Hülse würde dann ein direkter oder indirekter Kontakt zwischen der Hülse und dem Stellrad anzeigen, dass sich die Stelleinrichtung in vollständig geschlossener Position befindet. Dagegen würde ein Abstand zwischen dem Stellrad und der Hülse anzeigen, dass die Stelleinrichtung eine zumindest teilweise geöffnete Ventilstellung aufweist.

Mit Vorteil weist die Hülse Vorsprünge auf, welche bevorzugt in entsprechenden Vertiefungen im Grundkörper aufgenommen werden. Diese Ausführungsform zeichnet sich vorteilhaft dadurch aus, dass die Vorsprünge als Anzeige dienen können, aber weniger anfällig gegenüber versehentlich auf die Hülse ausgeübte Kräfte sind. Dies gilt besonders dann, wenn die Vorsprünge in entsprechenden Vertiefungen im Grundkörper aufgenommen werden, sodass die Vorsprünge gegen äussere Einflüsse besser geschützt sind. Solche äusseren Einflüsse können beispielsweise durch Kräfte entstehen, die auf die Hülse ausgeübt werden und diese auf dem Grundkörper verschieben. Darüber hinaus können die Vorsprünge in Verbindung mit entsprechenden Ausnehmungen als Verdrehsicherung für die Hülse fungieren, weil die Ausnehmungen für die Hülse die Funktion von Schienen oder Führungen haben. Und weiter bieten die beschriebenen Vorsprünge die Möglichkeit, diese farblich gegenüber dem Grundkörper abzusetzen. Auf diese Weise ist die Position des Stellrads und der Hülse gut ablesbar und es ist leicht erkennbar, dass die Vorsprünge eine Anzeigefunktion erfüllen. Die Hülse und der Grundkörper haben dabei bevorzugt einen deutlichen farblichen Unterschied zueinander. Die Hülse kann beispielsweise in einer Signalfarbe ausgeführt werden, wogegen der Grundkörper eine gedeckte, dunkle Farbe haben kann.

Alternativ kann auf die Vorsprünge verzichtet werden, indem beispielsweise eine Hülse der Form eines Zylindermantels oder Rings auf dem Grundkörper gelagert wird. In diesem Fall umschliesst die Hülse den Grundkörper rohrförmig. Bevorzugt kann die Hülse in ihrem oberen Bereich noch Aussparungen oder Sichtfenster aufweisen, welche einen Blick auf den Grundkörper zulassen. In diesem Zusammenhang ist es ebenfalls bevorzugt, dass die Hülse zumindest teilweise transparent ausgeführt ist. Allfällige auf dem Grundkörper angebrachte Markierungen können auf diese Weise von aussen gesehen werden, ohne dass die Hülse Vorsprünge aufweisen muss.

Bevorzugt beträgt dabei die Zahl der Vorsprünge der Hülse mindestens eins, bevorzugt drei. Mit Vorteil sind die bevorzugt mindestens drei Vorsprünge dabei gleichmässig über den Umfang der Hülse verteilt. Bei einer die Achse der Stelleinrichtung umlaufenden Hülse kann sichergestellt werden, dass aus jeder Blickrichtung mindestens einer der Vorsprünge sichtbar ist und die Verschlusssituation der Stelleinrichtung damit von jeder Seite aus abgelesen werden kann, wenn die Vorsprünge ausreichend gross gewählt werden.

Neben einer Ausführungsform mit einem Vorsprung und bevorzugt mindestens drei Vorsprüngen weist eine weitere bevorzugte Ausführungsform eine Vielzahl von Vorsprüngen auf. Die Zahl dieser Vorsprünge richtet sich nach dem Umfang der Hülse und ist so gewählt, dass die einzelnen Vorsprünge möglichst dünn ausgeführt sind.

Bevorzugt haben die Vorsprünge dabei einen maximalen Querschnitt von 4 mm. Diese Beschränkung trägt dazu bei, dass die Hülse eine geringe Angriffsfläche für äussere Einflüsse bietet. Zudem bilden die sehr dünnen Vorsprünge eine Sollbruchstelle, indem die Vorsprünge bei der Einwirkung äusserer Einflüsse abbrechen, bevor es zu einer Verschiebung der Hülse auf dem Grundkörper kommt. Eine derartige Ausgestaltung der Hülse reduziert also die Gefahr einer unbeabsichtigten bzw. nicht vorgesehenen Verschiebung der Position der Hülse.

Alternativ kann die Hülse mit nur einem Vorsprung oder zwei Vorsprüngen ausgeführt sein. In Fällen, in denen die Stelleinrichtung nicht von allen Seiten aus abgelesen werden muss, ist es beispielsweise nicht nötig drei Vorsprünge gleichmässig auf den Hülsenumfang zu verteilen. Die ebenfalls bevorzugte Ausführungsform einer den Grundkörper rohrförmig umschliessenden Hülse muss dagegen gar keinen Vorsprung aufweisen.

Bevorzugt wird der hohe Reibungswiderstand zumindest teilweise durch Riffelungen oder Zähne an der Hülse, dem Grundkörper oder an beiden herbeigeführt. Insbesondere ist es vorteilhaft, wenn die Riffelungen oder Zähne asymmetrisch sägezahnartig so ausgeführt sind, dass sie gegen ein Verschieben der Hülse auf dem Grundkörper in Verschlussrichtung der Spindel weniger Widerstand bilden als gegen eine Verschiebung der Hülse auf dem Grundkörper gegen die Verschlussrichtung der Spindel. Die Riffelungen oder Zähne sind dabei entlang der Verschlussrichtung der Spindel beabstandet. Riffelungen werden bevorzugt entlang des Innenmantels der Hülse und/oder des Aussenmantels des Grundkörpers in beabstandeten und im Wesentlichen senkrecht zu einer Spindelachse ausgerichteten Ebenen verlaufend angeordnet.

Riffelungen oder Zähne an der Gleitfläche bzw. an den Gleitflächen zwischen der Hülse und dem Grundkörper führen zu einem sehr hohen Reibungswiderstand für Bewegungen, die senkrecht zur Ausrichtung der Riffelungen oder Zähne verlaufen. Durch die Verwendung solcher Formen wird also erreicht, dass die Hülse und der Grundkörper einen sehr hohen Reibungswiderstand für Relativbewegungen gegeneinander besitzen. Durch die Verwendung von sägezahnartigen Zähnen oder Riffelungen ist es zudem möglich, den Reibungswiderstand abhängig von der Bewegungsrichtung festzulegen. So kann die durch das Stellrad aufzubringende Kraft zur Verschiebung der Hülse kleiner sein als die Kraft, welche nötig wäre, um die Hülse gegen die Verschliessrichtung zu verschieben. Einerseits weist eine solche Stelleinrichtung einen besonders hohen Widerstand für unbeabsichtigte Bewegungen der Hülse entgegen der Verschliessrichtung der Stelleinheit auf. Andererseits leistet sie einen vergleichsweise niedrigen Widerstand für Relativbewegungen der Hülse gegenüber dem Grundkörper in Verschliessrichtung.

Alternativ können auch beispielsweise symmetrisch ausgebildete oder abgerundete Zähne oder Rillen Verwendung finden.

In einer anderen bevorzugten Ausführungsform entsteht der hohe Reibungswiderstand zumindest teilweise durch eine Presspassung der Hülse auf den Grundkörper. Eine Presspassung lässt sich leicht und damit kostengünstig realisieren und ermöglicht ein stufenloses Verschieben der Hülse. Eine äussere Manipulation der Hülsenposition ist bei der Verwendung einer Presspassung zusätzlich erschwert.

Alternativ können Ausführungen vorgesehen werden, die den Reibungswiderstand nicht durch eine Presspassung erhöhen, sondern sich anderer Mechanismen bedienen. Eine Ausführung der Hülse oder des Grundkörpers mit Zähnen oder Rillen oder die Verwendung von Haftverstärkern, wie beispielsweise Klebern, sind hier beispielsweise ebenfalls denkbar.

In einer bevorzugten Ausführungsform sind die Vorsprünge durch eine Schwalbenschwanzführung oder eine Vorspannung nach innen gegen ein Abheben gesichert. Eine solche Sicherung der Vorsprünge gegen Abheben erschwert zusätzlich eine äussere Manipulation der Hülsenposition. Zudem birgt ein Abheben der Hülse gegenüber dem Grundkörper die Gefahr, dass die Hülse beschädigt wird. Vor allem dann, wenn die Hülse dünne Vorsprünge aufweist, kann es passieren, dass einzelne Vorsprünge abbrechen oder verbiegen, wenn sie abgehoben werden.

Alternativ können die Vorsprünge beispielsweise durch eine durchsichtige Schutzschicht gegen Abheben geschützt sein. So ist es denkbar, dass sie in Ausnehmungen im Grundkörper geführt werden, die nach aussen mit einem Schutzfilm oder einer durchsichtigen Schutzhülse abgedeckt sind, sodass ein Abheben der Vorsprünge ebenfalls verhindert wird.

In einer bevorzugten Ausführungsform entsteht der hohe Reibungswiderstand zumindest teilweise durch Klemmpassung der Vorsprünge in einer Führung. Die Dimensionierung der Führungen für die einzelnen Vorsprünge kann den Reibungswiderstand der Hülse für Relativbewegungen gegenüber dem Grundkörper beeinflussen.

Mit Vorteil weist die Stelleinrichtung zusätzlich an ihrem Grundkörper eine Markierung auf, die erst bei vollständig abgeschlossenem Öffnungsvorgang von aussen sichtbar ist. Diese Markierung lässt von aussen erkennen, wenn die Stelleinrichtung die vollständig geöffnete Ventilstellung einnimmt. Die Markierung wird vorzugsweise durch das Stellrad von der vollständig geschlossenen bis kurz vor die vollständig geöffnete Ventilstellung verdeckt.

Eine umlaufende Hülse kann in ihrem oberen Bereich bevorzugt Sichtfenster oder Aussparungen aufweisen, transparent oder halbtransparent ausgeführt sein. Eine derartige Ausführungsform lässt auch bei einer umlaufenden Hülse, welche keine einzelnen Vorsprünge aufweist, sondern den Grundkörper durchgehend überdeckt, den Blick eines Benutzers auf den darunter liegenden Grundkörper frei. Auf diese Weise ist es einem Benutzer auch in einer Ausführungsform des Ventils mit durchgehender Hülse möglich, neben der vollständig geschlossenen auch die vollständig geöffnete Ventilstellung abzulesen.

Bevorzugt weist ein erfindungsgemässes Ventil eine Rückdichtung am Ventilteller auf, sodass bei vollständig geöffneter Ventilstellung eine dichte, Spalt- und Totraum-freie Position des Ventiltellers eingenommen wird. Dies führt zu einer verbesserten Hygiene und verlängert die Lebensdauer des Ventils.

Bevorzugt wird die Markierung zur Anzeige der vollständig geöffneten Ventilstellung durch Ausnehmungen im stellradseitigen Ende des Grundkörpers gebildet. Das Stellrad umschliesst den Grundkörper und verdeckt somit das stellradseitige Ende des Grundkörpers. Eine Markierung, die an diesem Ende angebracht ist, wird dann sichtbar, wenn sich das Stellrad über dieses Ende hinaus bewegt.

Neben Ausnehmungen im Grundkörper können weitere Markierungen am stellradseitigen Ende des Grundkörpers angebracht werden. Dies können beispielsweise farbige oder andere reliefartige Markierungen oder eine beispielsweise durch Sandstrahlen aufgebrachte Aufrauung und damit einhergehende Mattierung der Oberfläche sein. Als Anzeige eignet sich auch, das Ende des Grundkörpers sichtbar werden zu lassen.

Bevorzugt weisen die Hülse und/oder der Grundkörper der Stelleinrichtung Referenzpositionen für das Stellrad auf. Bei den Referenzpositionen kann es sich um Markierungen handeln, welche beispielsweise durch Aufdrucken, Aufkleben oder Strukturieren, d. h. durch Einschnitte oder Auswölbungen auf der Hülse und/oder dem Grundkörper, angebracht werden. Auch andere Methoden, die Referenzpositionen auf der Hülse und/oder dem Grundkörper zu realisieren, sind grundsätzlich anwendbar. Besonders bevorzugt sind die Referenzpositionen aufgedruckte, aufgeklebte oder anderweitig auf der Hülse und/oder dem Grundkörper angebrachte Markierungen, welche mit Zahlen versehen sind. Die an den Markierungen angebrachten Zahlen ermöglichen auf einfache Weise eine präzise Quantifizierung der Ventilposition der Stelleinrichtung. Durch das Anbringen bevorzugt quantitativer Referenzpositionen an der Stelleinrichtung, kann diese auch als Durchflussventil mit einstellbarem Durchflussquerschnitt, beispielsweise zur Strangregulierung im Heizungsbau, eingesetzt werden.

Besonders bevorzugt weisen dabei sowohl die Hülse und/oder der Grundkörper als auch das Stellrad eigene Markierungen auf. Die Markierungen auf der Hülse und/oder dem Grundkörper eignen sich besonders für eine grobe Anzeige der Ventilstellung, insbesondere können auf der Hülse und/oder dem Grundkörper um mehrere Stellrad-Umdrehungen verschiedene Ventilstellungen unterschieden werden. Daneben erlauben Markierungen auf dem Stellrad eine feinere Anzeige der Ventilstellung, insbesondere durch eine Anzeige von Teilumdrehungen des Stellrads. Der Kragen des Stellrads eignet sich dabei besonders zum Anbringen der entsprechenden Markierungen.

Alternativ kann auch die Hülse und/oder der Grundkörper oder das Stellrad allein mit einer Markierung oder einer anderen Positionsanzeige ausgestattet werden. Eine Kombination einer Markierung mit einer anderweitigen Anzeige einer Referenzposition, beispielsweise durch die Formgebung der Hülse, kann ebenfalls eine hilfreiche Information über die Ventilstellung liefern.

Alternativ sind (neben den Begrenzungen der Hülse) keine Referenzpositionen vorhanden. Eine entsprechende Stelleinrichtung zeigt somit die Stellung des Ventils in seinen Extremalstellungen sehr präzise an. In den Zwischenstellungen ist ein Benutzer jedoch auf sein Augenmass angewiesen, wenn er die Ventilstellung ablesen möchte.

Die Stelleinrichtung kann modular ausgeführt werden, d. h. der Grundkörper kann sowohl mit als auch ohne Hülse eingesetzt werden und ist somit flexibel verwendbar. Eine Hülse kann auch nachträglich auf den Grundkörper aufgesetzt werden oder eine bereits auf dem Grundkörper aufgesetzte Hülse kann durch eine andere Hülse, beispielsweise eine Hülse mit Markierungen, ersetzt werden. Gleiches gilt für das Stellrad, welches auch durch ein anderes Stellrad ausgetauscht werden kann, ohne dass das gesamte Ventil auszubauen ist. Dies hat neben einer höheren Flexibilität am eingebauten Ventil, beispielsweise durch das Ermöglichen eines nachträglichen Einbaus einer Stellanzeige, den weiteren Vorteil, dass Lagerkosten aufgrund einer beschränkten Vielfalt von Bauteilen klein gehalten werden können.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: einen Schnitt durch einen Grundkörper mit aufgesetzter Hülse;
- Fig. 2: einen Schnitt durch eine geöffnete Stelleinrichtung;
- Fig. 3: einen Schnitt durch eine geschlossene Stelleinrichtung;
- Fig. 4: einen Schnitt durch einen Grundkörper mit Vertiefungen und auf dem Grundkörper gelagerter Hülse sowie Markierungen zur Anzeige einer voll-ständig geöffneten Ventilstellung;
- Fig. 5: ein Spindelventil von aussen;
- Fig. 6: einen Schnitt durch ein Spindelventil entlang der Linie B-B aus Fig. 5;
- Fig. 7: einen abnehmbaren Deckel für das Stellrad des Spindelventils aus Fig. 5;
- Fig. 8: eine Ausführungsform der Stelleinrichtung mit Stellungsmarkierungen.

Grundsätzlich sind in den Figuren gleiche Teile mit gleichen Bezugszeichen versehen.

### Wege zur Ausführung der Erfindung

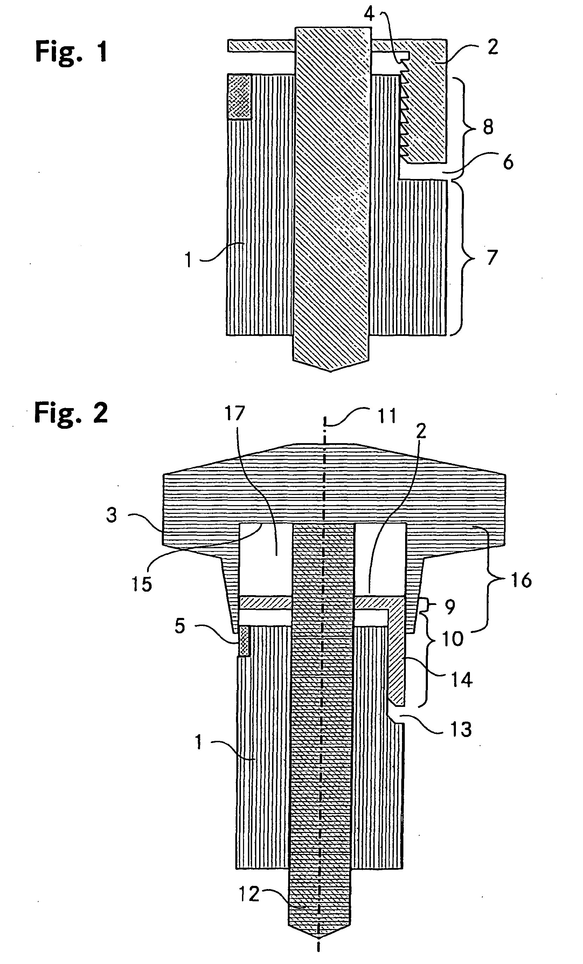

Die Figur 1 zeigt in einem Querschnitt eine schematische Darstellung eines im Wesentlichen zylinderförmigen Grundkörpers 1, der einen ersten Bereich 7 mit einem grösseren und einen zweiten Bereich 8 mit einem kleineren Radius aufweist. Eine Hülse 2 ist im Wesentlichen ringförmig und so dimensioniert, dass sie den zweiten Bereich 8 des Grundkörpers 1 teilweise umgebend auf dem Grundkörper 1 gelagert werden kann. Dabei ist der Radius des Aussenmantels der Hülse 2 im Wesentlichen so gross wie der Radius des ersten Bereichs 7 des Grundkörpers 1. Der Radius des Innenmantels der Hülse 2 ist im Wesentlichen so gross wie der Radius des zweiten Bereichs 8 des Grundkörpers 1. An ihrem Innenmantel weist die Hülse 2 sägezahnartige Riffelungen oder Zähne 4 auf, die eng an den zweiten Bereich 8 des Grundkörpers 1 anliegen und einen grossen Reibungswiderstand für Bewegungen der Hülse 2 auf dem Grundkörper 1 bewirken. Die Riffelungen oder Zähne sind dabei derart asymmetrisch sägezahnartig ausgeformt, dass sich die jeweils flach ansteigende Flanke auf der Seite der Verschlussrichtung der Spindel befindet, wogegen sich die jeweils steil ansteigende Flanke auf der der Verschlussrichtung der Spindel entgegengesetzten Seite befindet. Die Hülse 2 ist in Figur 2 nicht vollständig auf den Grundkörper 1 aufgesetzt, sodass zwischen dem unteren Rand der Hülse 2 und dem oberen Rand des ersten Bereichs 7 des Grundkörpers 1 ein Spalt 6 besteht. Der Spalt 6 wird kleiner, je tiefer die Hülse 2 auf den Grundkörper 1 aufgeschoben wird.

Die Figur 2 zeigt einen Schnitt längs der Spindelachse 11 einer erfindungsgemässen Stelleinrichtung, umfassend einen im Wesentlichen zylinderförmigen Grundkörper 1, eine Hülse 2 und ein Stellrad 3. Die Hülse 2 weist einen ersten Bereich 9 und einen zweiten Bereich 10 auf, wobei der erste Bereich 9 einen Ring um die Spindel 12 bildet. Der zweite Bereich 10 der Hülse 2 wird durch Vorsprünge 14 gebildet, die in entsprechenden Vertiefungen 13 im Grundkörper 1 aufgenommen werden können. Die Ausführungsform, welche in Figur 2 in der Schnittdarstellung abgebildet ist, zeichnet sich unter anderem dadurch aus, dass die Hülse 2 im zweiten Bereich 10 drei Vorsprünge 14 aufweist, welche gleichmässig über den Umfang der Hülse 2 verteilt angeordnet sind. Dort, wo der Grundkörper 1 keine Vertiefungen 13 zur Aufnahme der Vorsprünge 14 der Hülse 2 aufweist, ist am stellradseitigen Ende des Grundkörpers 1 eine Markierung 5 an dessen Aussenmantel angebracht. Das Stellrad 3 ist mit der Spindel 12 verbunden, die längs der Spindelachse 11 durch die Hülse 2 und den Grundkörper 1 verläuft. Das Stellrad 3 selbst ist so dimensioniert, dass sein Innenradius mindestens so gross wie der Aussenradius der Hülse 2 und des Grundkörpers 1 ist, sodass das Stellrad 3 die Hülse 2 und den Grundkörper 1 umschliessen kann. Das Stellrad 3 weist einen Hohlraum 17 in seinem Innern auf, der so geformt ist, dass er die Hülse 2 und einen Teil des Grundkörpers 1 aufnehmen kann. Die Tiefe 16 des Hohlraums 17 ist dabei so gewählt, dass die Hülse 2 samt ihren Vorsprüngen 10 vollständig in dem Hohlraum 17 aufgenommen werden kann. Die innere Stirnseite 15 des Hohlraums 17 ist so ausgebildet, dass sie einen formschlüssigen Kontakt mit der Hülse 2 herstellen kann, wenn das Stellrad 3 in Verschliessrichtung bewegt wird und die Hülse 2 berührt. In der geöffneten Ventilstellung der Stelleinrichtung legt das Stellrad 3 die Markierung 5 und grosse Teile der Vorsprünge 14 der Hülse 2 frei, sodass diese von aussen sichtbar sind.

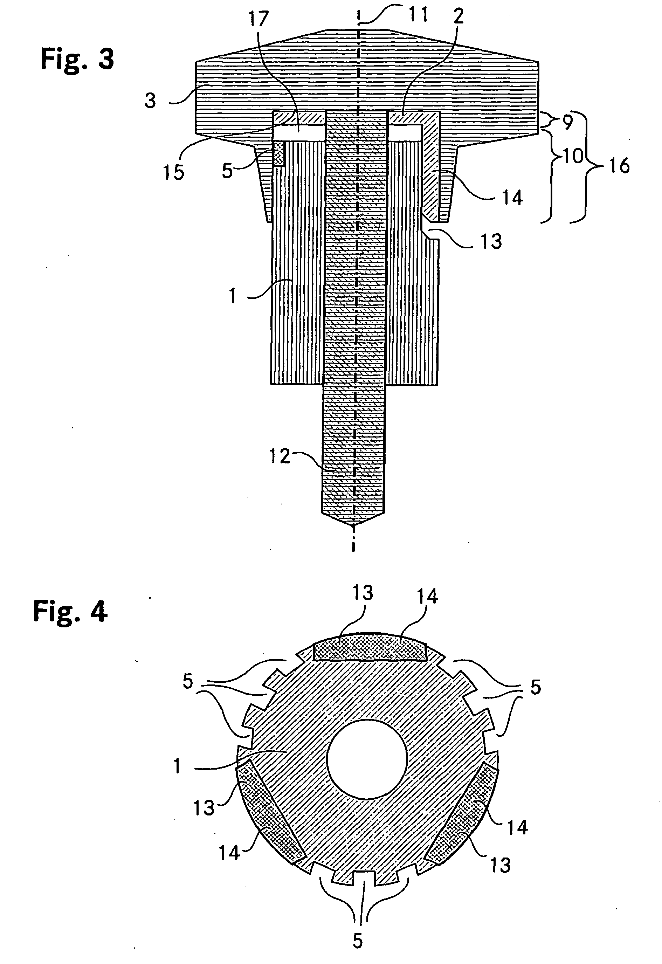

Die Figur 3 zeigt ebenfalls einen Schnitt längs der Spindelachse 11 der in der Figur 2 dargestellten erfindungsgemässen Stelleinrichtung, umfassend einen im Wesentlichen zylinderförmigen Grundkörper 1, eine Hülse 2 und ein Stellrad 3. Im Gegensatz zu Figur 2 zeigt die Figur 3 aber die Stelleinrichtung in verschlossener Position. In dieser Position ist die Spindel 12 so weit in den Grundkörper 1 und den dahinter liegenden Verschliessmechanismus eingeschraubt, dass das Spindelventil fluiddicht abschliesst. Der Hohlraum 17 im Stellrad 3 nimmt in dieser geschlossenen Position die Hülse 2 samt ihrer Vorsprünge 14 vollständig in sich auf, sodass kein Teil der Hülse 2 von aussen sichtbar ist. Das Verdecken der Hülse zeigt damit die verschlossene Position der Stelleinrichtung an.

Die Hülse 2 ist nicht vom Montagezeitpunkt an vollständig auf den Grundkörper 1 aufgesetzt bzw. die Vorsprünge 14 der Hülse 2 füllen die entsprechenden Vertiefungen 13 nicht vollständig aus. Der formschlüssige Kontakt zwischen der inneren Stirnseite 15 des Stellrads 3 und der Hülse 2 führt dazu, dass sich die Hülse 2 mit der Spindelbewegung und dem Stellrad 3 mitbewegt. Sobald das Spindelventil verschlossen ist, wird keine weitere Kraft durch das Stellrad 3 auf die Hülse 2 ausgeübt und die Hülse 2 verbleibt in ihrer Position. Ein Zurückdrehen des Stellrads 3 hat keinen Einfluss auf die Position der Hülse 2, weil die formschlüssige Verbindung zwischen Stellrad 3 und Hülse 2 sofort gelöst wird, wenn das Spindelventil in Öffnungsrichtung bewegt wird. Bei einem derartigen Spindelventil kann sich die vollständig geschlossene Position des Ventils jedoch mit der Zeit verändern. Je länger die Dichtungen im Innern des Ventils den hohen Belastungen beim festen Verschliessen des Ventils ausgesetzt sind, desto weiter weicht nämlich die vollständig geschlossene Ventilstellung zurück. Die Hülse 2 der Stelleinrichtung folgt dem Stellrad 3 aber jeweils bis in dessen Extremalposition, sodass die Anzeigefunktion der Hülse stets auf der Grundlage des letzten Verschliessens erfolgt und damit nicht mit zunehmender Alterung ungenau wird.

Die Figur 4 zeigt einen Schnitt durch einen Grundkörper 1 mit drei Vertiefungen 13 und eine auf dem Grundkörper 1 gelagerte Hülse 2. Der Grundkörper 1 ist in dieser Figur von oben gezeigt. Die drei Vertiefungen 13 im Grundkörper 1 nehmen hier die drei Vorsprünge 14 der Hülse 2 auf. In der Mitte des Grundkörpers 1 wird die Spindel 12 der Stelleinheit aufgenommen. Die Anzahl und der Querschnitt der Vorsprünge 14 können verändert werden. An dem stellradseitigen Ende des Grundkörpers 1 sind mehrere Markierungen 5 angebracht, die die vollständig geöffnete Position des Stellrads 3 anzeigen. Zudem bilden die Vertiefungen 13 im Grundkörper 1, welche die Vorsprünge 14 der Hülse 2 aufnehmen, eine Verdrehsicherung für die Hülse 2.

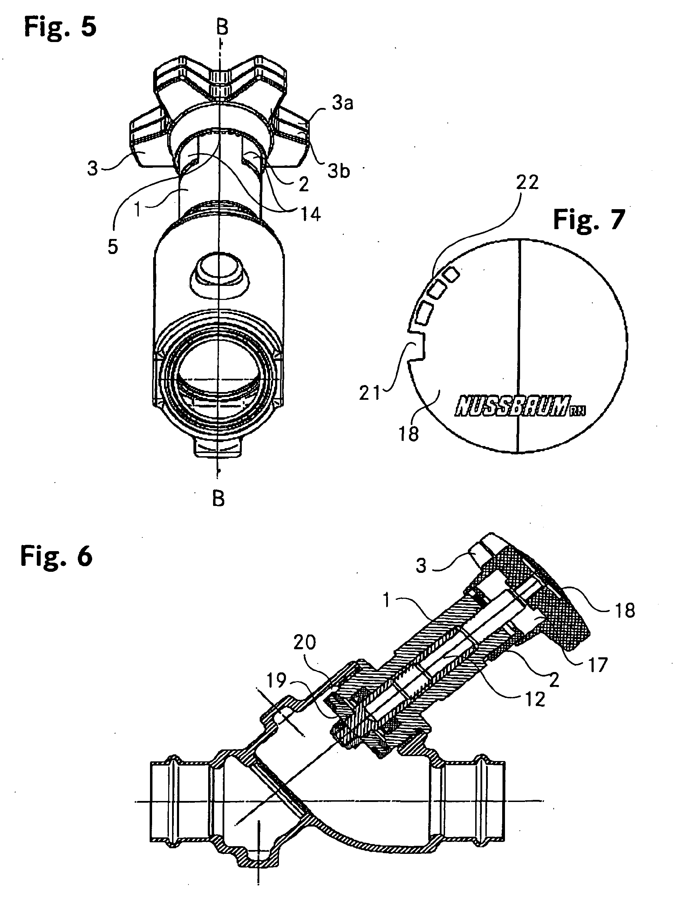

Figur 5 zeigt ein Spindelventil mit einer erfindungsgemässen Stelleinrichtung. Die Stelleinrichtung umfasst einen Grundkörper 1, eine Hülse 2 mit Vorsprüngen 14 und ein Stellrad 3, welches aus einem unteren 3b und einem oberen 3a Teil besteht, wobei die Trennlinie zwischen den beiden Teilen 3a, 3b des Stellrads 3 ungefähr in der Mitte des Stellrads in einer Ebene verläuft, die im Wesentlichen senkrecht zur Spindelachse ausgerichtet ist.

Die Figur 6 zeigt einen Schnitt durch das Spindelventil aus Figur 5 entlang der dort eingezeichneten Linie B-B. Auf einem Grundkörper 1 ist eine Hülse 2 gelagert. Eine Spindel 12 verläuft durch den Grundkörper 1 und die Hülse 2 und wird von einem Stellrad 3 angetrieben. Das Stellrad 3 weist einen Hohlraum 17 auf, der dazu geeignet ist die Hülse 2 und Teile des Grundkörpers 1 in sich aufzunehmen.

Figur 7 zeigt eine Draufsicht auf einen abnehmbaren Deckel 18, der sich auf der Oberfläche des Stellrads befindet und der eine Ausnehmung 21 für einen Schraubenzieher aufweist. Die Ausnehmung 21 für den Schraubenzieher zum Abnehmen des Deckels ist gleichzeitig Teil einer grafischen Anzeige 22 für eine Öffnungsrichtung des Stellrads. Durch die Spindel 12 wird ein Ventilteller 19 bewegt, der das Verschliessen der Leitung bewirkt. Die Markierung zum Anzeigen der vollständig geöffneten Position der Stelleinrichtung ermöglicht es einem Bediener das Ventil nahezu vollständig zu öffnen, ohne dabei den Anschlag der Spindel zu belasten. Ein unmittelbar bevorstehendes Erreichen der vollständig geöffneten Position wird durch die Markierung angezeigt und ein Öffnen bis zum Anschlag des Ventiltellers und Verbleiben in dieser für die Rückdichtung 20 des Ventiltellers 19 ungünstigen Position wird dadurch unnötig.

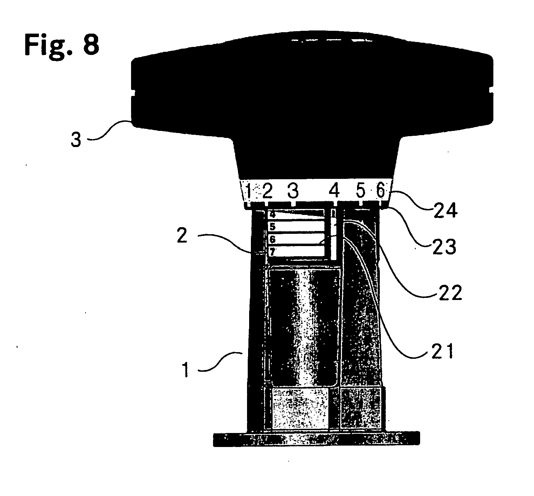

Die Figur 8 zeigt eine bevorzugte Ausführungsform der Stelleinrichtung mit Markierungen 21, 22 auf der Hülse 2 und Markierungen 23, 24 auf dem Stellrad 3. In dieser bevorzugten Ausführungsform der Stelleinrichtung ist wie in den zuvor beschriebenen Ausführungsformen eine Hülse 2 auf den Grundkörper 1 aufgesetzt. Die Hülse 2 weist dabei Markierungen 21 auf, welche die Ventilstellung des Ventils anzeigen. Die Markierungen 21 verlaufen dabei parallel zum Kragen des Stellrads 3 und werden vom Stellrad 3 - je nach Stellung des Ventils - verdeckt oder freigelegt. Die von aussen sichtbaren Zahlen an den Markierungen 21 geben die Anzahl Umdrehungen der Ventilspindel wieder, somit lässt sich anhand der Markierungen 21 die Ventilstellung grob ablesen. Weiter ist auf der Hülse 2 eine Positionsanzeige 22 angebracht, welche mit einer weiteren Markierung 23 am Kragen des Stellrads 3 zusammenwirkt. Die Positionsanzeige 22 auf der Hülse 2 ist parallel zur Spindelachse und damit senkrecht zum Kragen des Stellrads 3 ausgerichtet. Auf dem Stellrad 3 sind entlang des Umfangs des Stellrads 3 Striche aufgedruckt, welche bevorzugt gleichmässig über den Kragen verteilt sind. Zusammen mit den Markierungen 23 am Kragen des Stellrads 3 ist eine Beschriftung 24, im vorliegenden Fall eine fortlaufende Nummerierung, am Stellrad 3 angebracht. Auf diese Weise lassen sich die Markierungen 23 mit den Beschriftungen 24 identifizieren. Jeder Strich der Markierung 23 kann mit der Positionsanzeige 22 auf der Hülse 2 in Deckung gebracht werden. Damit ist die Winkelposition des Stellrads 3 eindeutig beschrieben. Um die Zahl der Umdrehungen zusammen mit der Winkelstellung des Stellrads 3 und damit die tatsächliche Ventilstellung des Ventils anzuzeigen, wird die Anzeige der Markierungen 23, 24 auf dem Kragen des Stellrads 3 mit der Anzeige der Markierungen 21 auf der Hülse 2 kombiniert (z. B. gemäss Figur 8: "4 Umdrehungen geschlossen, Nummer 4").

Der Grundkörper der Stelleinrichtung kann bevorzugt aus Kunststoff gefertigt sein, wobei sich zur Herstellung eines solchen bevorzugt einteiligen Grundkörpers unter anderem bevorzugt glasfaserverstärktes Polyphtalamid (PPA) eignet. Weitere bevorzugte Materialien sind ebenfalls glasfaserverstärktes Polyphenylensulfid (PPS), glasfaserverstärktes Polysulfon (PSU), Polyphenylensulfon (PPSU) oder vernetztes Polyethylen (PEX). Dabei kann der Volumenanteil der Glasfaser 20 % - 60 %, bevorzugt 30 % - 50 % und besonders bevorzugt 40 % - 50 % betragen. Insbesondere können derartige Kunststoffe beispielsweise mit einem Glasfaseranteil weiter verstärkt werden. Das Gewinde für die Spindel ist dagegen vorzugsweise aus Metall gefertigt, es kann beispielsweise als eine metallische Gewindebüchse in das Kunststoffgehäuse eingespritzt oder eingeschraubt und festgeklebt sein. Die bisher übliche Verwendung eines Metallgehäuses und eines O-Rings als Spindelbremse kann durch die Verwendung eines Kunststoffgehäuses überflüssig werden, wenn das Kunststoffgehäuse derart ausgeführt ist, dass es eine ähnliche Bremswirkung auf die Spindel erzielt. Dies kann beispielsweise durch die richtige Wahl der Dimensionierungstoleranzen des Kunststoffgehäuses erreicht werden. Die oben beschriebene Stelleinrichtung eignet sich zur Kombination mit einer Vielzahl verschiedener Spindelventile. Bevorzugt kann die Stelleinrichtung mit einem Rückflussverhinderer kombiniert werden, bei welchem ein Ventilteller auf einer Feder gelagert ist, welche dauerhaft eine Kraft auf den Ventilteller ausübt.

Es sind auch Kombinationen der beschriebenen Ausführungsformen denkbar. Das Gehäuse kann aus verschiedenen Materialien, neben Kunststoff, der bevorzugt verrippt gestaltet ist, insbesondere auch aus Metall, beispielsweise Messing, Rotguss oder Edelstahl, gefertigt sein. Der hohe Reibungswiderstand zwischen der Hülse und dem Grundkörper kann auf verschiedene Weisen realisiert werden. So ist neben Zähnen und Riffelungen, einer Klemm- oder Presspassung oder Haftverstärkern beispielsweise auch die Verwendung einer Gummischicht an den Grenzflächen zwischen der Hülse und dem Grundkörper zur Erzeugung einer Gleithemmung zwischen der Hülse und dem Grundkörper möglich. Eine aufgeraute Grenzfläche leistet ebenfalls einen solchen Beitrag zum Reibungswiderstand zwischen der Hülse und dem Grundkörper. Zudem muss der Grundkörper oder die Hülse nicht zylinderförmig ausgeführt sein.

Bevorzugt wird das Spindelventil von unten, das heisst vom ventiltellerseitigen Ende in Richtung des Stellrads in den Grundkörper eingeschoben und montiert. Hierzu wird die Spindel in eine Führungsstange eingesetzt, welche im Grundkörper befestigt wird. Die Führungsstange weist in einem oberen Teilbereich eine Sechskantform auf, wobei die Führungsstange eine Aussen-Sechskantform und der Grundkörper die entsprechende Innen-Sechskantform aufweisen. Um eine korrekte Orientierung der Führungsstange gegenüber dem Grundkörper sicherzustellen, ist die Führungsstange im Bereich ihrer Spitze mit Markierungen versehen, welche mit der Sechskantform im oberen Teil der Führungsstange korrespondieren und diese automatisch korrekt von unten zu installieren erlauben.

Zusammenfassend ist festzustellen, dass mit der Erfindung eine vielseitig einsetzbare, zuverlässige und präzise Stelleinrichtung mit einer Anzeige realisiert wird, die die Position eines steigenden Spindelventils von aussen gut sichtbar macht. Dabei justiert sich die Stellanzeige mit jeder Bedienung des Spindelventils selbst, insofern sie sich der kontinuierlichen Abnutzung und Formveränderung der Dichtungen im Innern der Stelleinheit anpasst.

## Patentansprüche

1. Stelleinrichtung für ein steigendes Spindelventil, umfassend einen Grundkörper (1), eine Spindel (12) und ein Stellrad (3) zur Betätigung der Spindel (12), **gekennzeichnet durch** eine Hülse (2), die so auf dem Grundkörper (1) gelagert ist, dass bei einem Verschliessvorgang zwischen ihr (2) und dem Stellrad (3) ein direkter oder indirekter Kontakt hergestellt wird, die Hülse (2) dem Stellrad (3) bei jedem Verschliessvorgang bis zu dessen Extremalstellung folgt und diese Position während eines anschliessenden Öffnungsvorgangs beibehält.

2. Stelleinrichtung nach Anspruch 1, **dadurch gekennzeichnet, dass** zwischen der Hülse (2) und dem Stellrad (3) ein formschlüssiger Kontakt hergestellt wird.

3. Stelleinrichtung nach einem der Ansprüche 1 oder 2, **dadurch gekennzeichnet, dass** die Hülse (2) so auf den Grundkörper (1) aufgesetzt ist, dass zwischen der Hülse (2) und dem Grundkörper (1) ein hoher Reibungswiderstand besteht.

4. Stelleinrichtung nach Anspruch 3, **dadurch gekennzeichnet, dass** der hohe Reibungswiderstand zumindest teilweise durch Riffelungen oder Zähne (4) an der Hülse (2), dem Grundkörper (1) oder an beiden entsteht, wobei insbesondere die Riffelungen oder Zähne (4) sägezahnartig ausgeführt sind.

5. Stelleinrichtung nach einem der Ansprüche 3 oder 4, **dadurch gekennzeichnet, dass** der hohe Reibungswiderstand zumindest teilweise durch eine Presspassung der Hülse (2) auf den Grundkörper (1) entsteht.

6. Stelleinrichtung nach einem der Ansprüche 1 bis 5, **dadurch gekennzeichnet, dass** die Hülse (2) durch das Stellrad (3) zumindest teilweise verdeckbar ist.

7. Stelleinrichtung nach einem der Ansprüche 1 bis 6, **dadurch gekennzeichnet, dass** die Hülse (2) den Grundkörper (1) rohrförmig umschliessend ausgeführt ist.

8. Stelleinrichtung nach einem der Ansprüche 1 bis 7, **dadurch gekennzeichnet, dass** die Hülse (2) in ihrem handradseitigen Bereich Aussparungen aufweist oder zumindest teilweise transparent ausgebildet ist.

9. Stelleinrichtung nach einem der Ansprüche 1, bis 8, **dadurch gekennzeichnet, dass** die Hülse (2) Vorsprünge (14) aufweist, welche bevorzugt in entsprechenden Vertiefungen (13) im Grundkörper (1) aufgenommen werden können.

10. Stelleinrichtung nach Anspruch 9, **dadurch gekennzeichnet, dass** die Zahl der Vorsprünge (14) in der Hülse (2) mindestens eins, bevorzugt mindestens drei beträgt.

11. Stelleinrichtung nach Anspruch 10, **dadurch gekennzeichnet, dass** die Zahl der Vorsprünge (14) der Hülse (2) mindestens drei beträgt und dass die Vorsprünge (14) einen Querschnitt von maximal 4 mm aufweisen.

12. Stelleinrichtung nach einem der Ansprüche 9 bis 11, **dadurch gekennzeichnet, dass** die Vorsprünge (14) durch eine Schwalbenschwanzführung oder eine Vorspannung nach innen gegen ein Abheben gesichert sind.

13. Stelleinrichtung nach einem der Ansprüche 3 bis 5 und nach einem der Ansprüche 9 bis 12, **dadurch gekennzeichnet, dass** der hohe Reibungswiderstand zumindest teilweise durch Klemmpassung der Vorsprünge (14) in einer Führung entsteht.

14. Stelleinrichtung nach einem der Ansprüche 1 bis 13, **dadurch gekennzeichnet, dass** am Grundkörper (1) zusätzlich eine Markierung (5) angebracht ist, die erst bei vollständig abgeschlossenem Öffnungsvorgang von aussen sichtbar ist.

15. Stelleinrichtung nach Anspruch 14, **dadurch gekennzeichnet, dass** die Markierung (5) durch Ausnehmungen im stellradseitigen Ende des Grundkörpers (1) gebildet wird.

16. Stelleinrichtung nach einem der Ansprüche 1 bis 15, **dadurch gekennzeichnet, dass** die Hülse (2) Referenzpositionen für das Stellrad (3) aufweist.

17. Stelleinrichtung nach einem der Ansprüche 1 bis 16, **dadurch gekennzeichnet, dass** die Hülse (2) und das Stellrad (3) Markierungen zur Stellungsanzeige aufweisen, wobei insbesondere die Markierungen auf der Hülse (2) eine grobe und die Markierungen auf dem Stellrad (3) eine feine Stellungsanzeige darstellen.

18. Stelleinrichtung nach einem der Ansprüche 1 bis 17, **dadurch gekennzeichnet, dass** der Grundkörper im Wesentlichen aus glasfaserverstärktem Polysulfon (PSU) oder glasfaserverstärktem Polyphtalamid (PPA) hergestellt ist.

19. Stelleinrichtung nach Anspruch 18, **dadurch gekennzeichnet, dass** der Volumenanteil der Glasfaser 20 % bis 60 %, bevorzugt 30 % bis 50 %, besonders bevorzugt 40 % bis 50 % beträgt.

20. Ventileinsatz mit einer Stelleinrichtung nach einem der Ansprüche 1 bis 19.

21. Steigendes Spindelventil mit einer Stelleinrichtung nach einem der Ansprüche 1 bis 19.

22. Verwendung einer Stelleinrichtung nach einem der Ansprüche 1 bis 19 in einem Trinkwassersystem.

## Claims

1. Adjusting device for a rising spindle valve, comprising a basic body (1), a spindle (12) and an adjusting wheel (3) for actuating the spindle (12), **characterized by** a sleeve (2) which is mounted on the basic body (1) in such a way that, during a closing operation between it (2) and the adjusting wheel (3), a direct or indirect contact is produced, and the sleeve (2) follows the adjusting wheel (3) during each closing operation as far as its end position and maintains this position during a subsequent opening operation.

2. Adjusting device according to Claim 1, **characterized in that** a positive contact is produced between the sleeve (2) and the adjusting wheel (3).

3. Adjusting device according to either of Claims 1 and 2, **characterized in that** the sleeve (2) is placed on the basic body (1) in such a way that a high frictional resistance exists between the sleeve (2) and the basic body (1).

4. Adjusting device according to Claim 3, **characterized in that** the high frictional resistance results at least partially from ribbings or teeth (4) on the sleeve (2), on the basic body (1) or on both, wherein in particular the ribbings or teeth (4) are designed in the manner of saw teeth.

5. Adjusting device according to either of Claims 3 and 4, **characterized in that** the high frictional resistance results at least partially from a press fit of the sleeve (2) onto the basic body (1).

6. Adjusting device according to one of Claims 1 to 5, **characterized in that** the sleeve (2) can be concealed at least partially by the adjusting wheel(3).

7. Adjusting device according to one of Claims 1 to 6, **characterized in that** the sleeve (2) is designed to enclose the basic body (1) in the form of a tube.

8. Adjusting device according to one of Claims 1 to 7, **characterized in that**, in its region on the handwheel side, the sleeve (2) has cutouts or is designed to be at least partially transparent.

9. Adjusting device according to one of Claims 1 to 8, **characterized in that** the sleeve (2) has projections (14) which can preferably be received in corresponding depressions (13) in the basic body (1).

10. Adjusting device according to Claim 9, **characterized in that** the number of projections (14) in the sleeve (2) is at least one, preferably at least three.

11. Adjusting device according to Claim 10, **characterized in that** the number of projections (14) in the sleeve (2) is at least three, and **in that** the projections (14) have a cross section of at most 4 mm.

12. Adjusting device according to one of Claims 9 to 11, **characterized in that** the projections (14) are secured against lifting by means of a dovetail guide or a prestressing towards the inside.

13. Adjusting device according to one of Claims 3 to 5 and according to one of Claims 9 to 12, **characterized in that** the high frictional resistance results at least partially from a clamping fit of the projections (14) in a guide.

14. Adjusting device according to one of Claims 1 to 13, **characterized in that** a marking (5) is additionally provided on the basic body (1), which marking is visible from outside only when the opening operation is completely terminated.

15. Adjusting device according to Claim 14, **characterized in that** the marking (5) is formed by recesses in the adjusting wheel-side end of the basic body (1).

16. Adjusting device according to one of Claims 1 to 15, **characterized in that** the sleeve (2) has reference positions for the adjusting wheel (3).

17. Adjusting device according to one of Claims 1 to 16, **characterized in that** the sleeve (2) and the adjusting wheel (3) have markings for position indication, wherein in particular the markings on the sleeve (2) represent a coarse position indication and the markings on the adjusting wheel (3) represent a fine position indication.

18. Adjusting device according to one of Claims 1 to 17, **characterized in that** the basic body is substantially produced from glass-fibre-reinforced polysulfone (PSU) or glass-fibre-reinforced polyphthalamide (PPA).

19. Adjusting device according to Claim 18, **characterized in that** the proportion by volume of the glass fibres is 20% to 60%, preferably 30% to 50%, particularly preferably 40% to 50%.

20. Valve insert with an adjusting device according to one of Claims 1 to 19.

21. Rising spindle valve with an adjusting device according to one of Claims 1 to 19.

22. Use of an adjusting device according to one of Claims 1 to 19 in a drinking water system.

## Revendications

1. Système de réglage pour une soupape à tige montante, comprenant un corps de base (1), une tige (12) et une molette de réglage (3) pour l'actionnement de la tige (12), **caractérisé par** un manchon (2) qui est monté sur le corps de base (1) de telle sorte que dans le cas d'une opération de fermeture entre lui (2) et la molette de réglage (3), un contact direct ou indirect soit établi, le manchon (2) suivant la molette de réglage (3) lors de chaque opération de fermeture jusqu'à sa position extrême et maintenant cette position pendant une opération d'ouverture subséquente.

2. Système de réglage selon la revendication 1, **caractérisé en ce qu'**un contact par engagement positif est établi entre le manchon (2) et la molette de réglage (3).

3. Système de réglage selon l'une quelconque des revendications 1 ou 2, **caractérisé en ce que** le manchon (2) est posé sur le corps de base (1) de telle sorte qu'entre le manchon (2) et le corps de base (1) existe une résistance de frottement élevée.

4. Système de réglage selon la revendication 3, **caractérisé en ce que** la résistance de frottement élevée est produite au moins en partie par des cannelures ou des dents (4) sur le manchon (2), le corps de base (1) ou les deux, les cannelures ou les dents (4) étant notamment réalisées en forme de dents de scie.

5. Système de réglage selon l'une quelconque des revendications 3 ou 4, **caractérisé en ce que** la résistance de frottement élevée est produite au moins en partie par un ajustement serré du manchon (2) sur le corps de base (1).

6. Système de réglage selon l'une quelconque des revendications 1 à 5, **caractérisé en ce que** le manchon (2) peut être recouvert au moins en partie par la molette de réglage (3).

7. Système de réglage selon l'une quelconque des revendications 1 à 6, **caractérisé en ce que** le manchon (2) est réalisé de manière à entourer le corps de base (1) sous forme tubulaire.

8. Système de réglage selon l'une quelconque des revendications 1 à 7, **caractérisé en ce que** le manchon (2) présente des évidements dans sa région du côté de la molette ou est au moins en partie transparent.

9. Système de réglage selon l'une quelconque des revendications 1 à 8, **caractérisé en ce que** le manchon (2) présente des saillies (14) qui peuvent de préférence être reçues dans des renfoncements correspondants (13) dans le corps de base (1).

10. Système de réglage selon la revendication 9, **caractérisé en ce que** le nombre des saillies (14) dans le manchon (2) est d'au moins un, de préférence d'au moins trois.

11. Système de réglage selon la revendication 10, **caractérisé en ce que** le nombre des saillies (14) du manchon (2) est d'au moins trois et **en ce que** les saillies (14) présentent une section transversale de 4 mm au maximum.

12. Système de réglage selon l'une quelconque des revendications 9 à 11, **caractérisé en ce que** les saillies (14) sont fixées contre un soulèvement par un guidage en queue d'aronde ou une précontrainte vers l'intérieur.

13. Système de réglage selon l'une quelconque des revendications 3 à 5, et selon l'une quelconque des revendications 9 à 12, **caractérisé en ce que** la résistance de frottement élevée est produite au moins en partie par un ajustement par serrage des saillies (14) dans un guide.

14. Système de réglage selon l'une quelconque des revendications 1 à 13, **caractérisé en ce qu'**un marquage (5) est en outre pratiqué sur le corps de base (1), lequel est visible depuis l'extérieur seulement lorsque l'opération d'ouverture est complètement terminée.

15. Système de réglage selon la revendication 14, **caractérisé en ce que** le marquage (5) est formé par des évidements dans l'extrémité du corps de base (1) du côté de la molette de réglage.

16. Système de réglage selon l'une quelconque des revendications 1 à 15, **caractérisé en ce que** le manchon (2) présente des positions de référence pour la molette de réglage (3).

17. Système de réglage selon l'une quelconque des revendications 1 à 16, **caractérisé en ce que** le manchon (2) et la molette de réglage (3) présentent des marquages pour l'indication de positions, les marquages sur le manchon (2) représentant notamment une indication de positions grossière et les marquages sur la molette de réglage (3) représentant une indication de positions fine.

18. Système de réglage selon l'une quelconque des revendications 1 à 17, **caractérisé en ce que** le corps de base est fabriqué essentiellement en polysulfone renforcée par des fibres de verre (PSU) ou en polyphtalamide renforcé par des fibres de verre (PPA).

19. Système de réglage selon la revendication 18, **caractérisé en ce que** la proportion en volume des fibres de verre est de 20% à 60%, de préférence de 30% à 50%, particulièrement préférablement de 40% à 50%.

20. Insert de soupape comprenant un système de réglage selon l'une quelconque des revendications 1 à 19.

21. Soupape à tige montante comprenant un système de réglage selon l'une quelconque des revendications 1 à 19.

22. Utilisation d'un système de réglage selon l'une quelconque des revendications 1 à 19 dans un système d'eau potable.
